# EUROPÄISCHE PATENTSCHRIFT

(11) **EP 1 367 665 B1**
(45) Veröffentlichungstag und Bekanntmachung des Hinweises auf die Patenterteilung: **11.10.2006**
(21) Anmeldenummer: 03008304.2
(22) Anmeldetag: 10.04.2003
(51) Int. Cl.: H01M 10/04, H01M 10/40, H01M 4/40

(54) **Verfahren zur Herstellung eines wiederaufladbaren galvanischen Elementes mit einer negativen Lithium/Indium Elektrode**
Method for manufacturing of a rechargeable galvanic element with a negative lithium/indium electrode
Procédé de fabrication d'un élément galvanique rechargeable comprenant une électrode negative au lithium/indium

(30) Priorität: 02.05.2002 DE 10219425
(43) Veröffentlichungstag der Anmeldung: 03.12.2003
(73) Patentinhaber: VARTA Microbattery GmbH, 30419 Hannover (DE)
(72) Erfinder: Holl, Konrad Dr., 73434 Aalen-Dewangen (DE); Perner, Arno Dr., 73479 Ellwangen (DE); Wagner, Horst, 73494 Rosenberg (DE); Hennrich, Rolf, 73479 Ellwangen (DE); Ilic, Dejan Dr., 73479 Ellwangen (DE)
(74) Vertreter: Patentanwälte Ruff, Wilhelm, Beier, Dauster & Partner

(56) Entgegenhaltungen:
- EP-A- 0 829 913
- DE-A- 3 816 199
- US-A- 4 717 634
- PATENT ABSTRACTS OF JAPAN vol. 017, no. 593 (E-1454), 28. Oktober 1993 (1993-10-28) & JP 05 182693 A (MATSUSHITA ELECTRIC IND CO LTD), 23. Juli 1993 (1993-07-23)
- PATENT ABSTRACTS OF JAPAN vol. 011, no. 023 (E-473), 22. Januar 1987 (1987-01-22) & JP 61 193360 A (SANYO ELECTRIC CO LTD), 27. August 1986 (1986-08-27)
- PATENT ABSTRACTS OF JAPAN vol. 013, no. 246 (E-769), 8. Juni 1989 (1989-06-08) & JP 01 048369 A (HITACHI LTD;OTHERS: 01), 22. Februar 1989 (1989-02-22)

## Beschreibung

Gegenstand der Erfindung ist ein Verfahren zur Herstellung eines wiederaufladbaren galvanischen Elements, insbesondere in Form einer Knopfzelle mit negativer Elektrode aus einer Lithium/Indium-Legierung, einer positiven Lithium-interkalierenden Elektrode und einem organischen Elektrolyten.

Bei Verwendung von Lithium als negatives Elektrodenmaterial in wiederaufladbaren galvanischen Elementen tritt das Problem auf, dass Lithium bei Ladung und Entladung Dendriten bildet. In derartigen galvanischen Elementen werden daher Lithium/Aluminium-Legierungen oder auch Lithium/Indium-Legierungen als aktives negatives Elektrodenmaterial verwendet. Die negative Elektrode ist dabei, wie beispielsweise aus der DE 3816199 A1 hervorgeht, als Zweischichten-Struktur ausgebildet und besteht aus einer Schicht aus einer Lithium/Aluminium-Legierung und einer Schicht aus Aluminium.

In Patent Abstracts of Japan vol. 011, no. 023 (E-473), 22. Januar 1987 (Sanyo Electric Co. Ltc.) ist die Herstellung von Knopfzellen beschrieben, bei denen die negative Elektrode aus einer Lithium-Indium-Legierung besteht. Diese Legierung wird jedoch nicht in-Situ gebildet.

Auch in Patent Abstracts of Japan vol. 013, no. 246 (E-769), 8. Juni 1989 (Hitachi Ltd u.a.) ist keine in-Situ-Bildung der dort angesprochenen Legierungsmaterialen für Knopfzellen offenbart.

Die EP-A-0829913 zeigt ebenfalls die Verwendung von Lithium-Indium-Legierungen für Knopfzellen. Dort werden jedoch keine getrennten Indium- und Lithiumschichten zur Herstellung der negativen Elektrode verwendet.

Schließlich beschäftigt sich auch das US-Patent 4,717,634 mit der Herstellung von Knopfzellen und der Verwendung von Lithium-Legierungen in der negativen Elektrode. Dort erfolgt allerdings auch keine in-Situ-Legierungsbildung bei der Herstellung dieser Knopfzelle.

Der Erfindung liegt die Aufgabe zugrunde, das Herstellungsverfahren solcher galvanischer Elemente, insbesondere die Herstellung der negativen Elektrode des Elements, zu vereinfachen.

Diese Aufgabe wird erfindungsgemäß bei einem Verfahren zur Herstellung eines wiederaufladbaren galvanischen Elements der eingangs genannten Gattung durch die Merkmale des Anspruchs 1 gelöst. Vorteilhafte sowie bevorzugte Ausgestaltungen der Erfindung sind Gegenstand der abhängigen Ansprüche 2 und 3 und werden im folgenden näher erläutert. Der Wortlaut der Ansprüche wird dabei durch ausdrückliche Bezugnahme zum Inhalt der Beschreibung gemacht.

Gemäß der Erfindung werden in ein negatives Gehäusehalbteil eine Lithiumschicht und eine Indiumschicht eingebracht. In das dazugehörige positive Gehäusehalbteil wird das positive Elektrodenmaterial eingebracht. Die beiden Gehäusehalbteile werden nach Zugabe bzw. Zudosieren des organischen Elektrolyten und nach Zwischenlage eines Separators, unter Einfügung einer Dichtung zwischen den Gehäusehalbteilen, zu einer Knopfzelle verbunden oder verbördelt. Anschließend wird durch Lagerung oder mindestens einen anschließenden Lade/Entladezyklus aus der Lithium- und der Indiumschicht eine Lithium/Indium-Legierungsschicht gebildet.

Bei der Erfindung werden dabei die Lithiumschicht und die Indiumschicht aus von einer Rolle laufenden Materialbändern direkt in das negative Gehäusehalbteil eingebracht oder eingestanzt. Es ist vorteilhaft, vor dem Einstanzen der Lithium- oder der Indiumschicht ein Ableiter in das negative Gehäusehalbteil einzubringen oder einzuschweißen. Der Ableiter kann ein Ableiternetz sein.

Bevorzugt ist ein Verfahren, bei dem zuerst die Indiumschicht in das negative Gehäusehalbteil eingebracht wird.

Im Folgenden ist der Gegenstand der Erfindung anhand der schematischen Figuren näher erläutert.

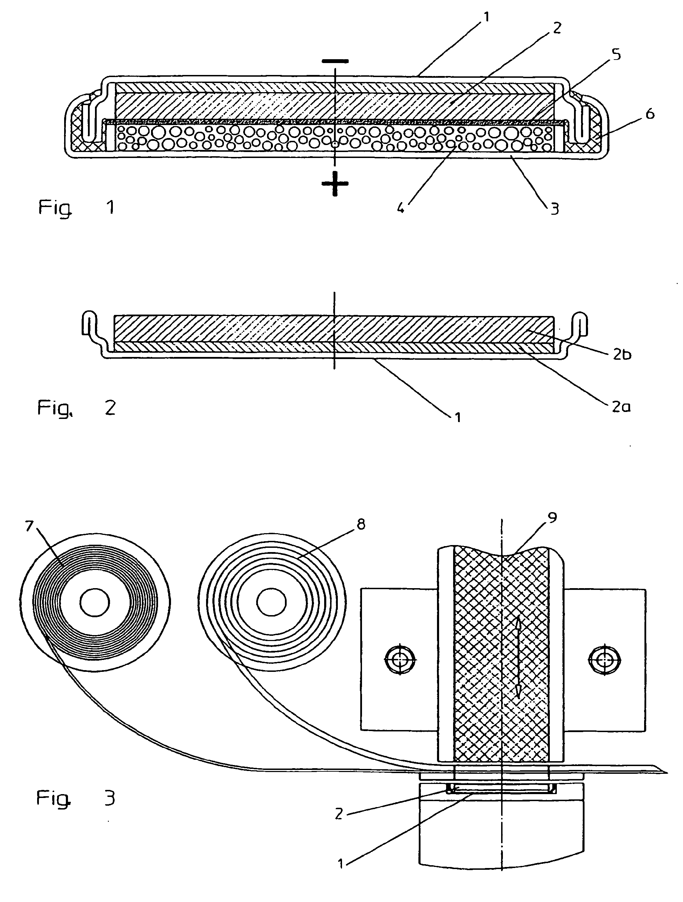

Figur 1 stellt dabei schematisch eine erfindungsgemäße Knopfzelle dar. Diese Knopfzelle besitzt ein negatives Gehäusehalbteil 1, welches im Allgemeinen den Zellendeckel der Knopfzelle und ein positives Gehäusehalbteil 3 bildet. Das negative Gehäusehalbteil 1 enthält die Lithium/indium-Legierungselektrode. Das positive Gehäusehalbteil 3 enthält eine Lithium-interkalierende Elektrode 4, beispielsweise lithiierter Braunstein LiₓMnO₂. Zwischen positiver Elektrode 4 und negativer Elektrode 2 ist in üblicher Weise ein Separator 5 angeordnet. Die beiden Gehäusehalbteile 1 und 3 sind unter Zwischenlage einer Dichtung 6 miteinander verbördelt.

In Figur 2 ist schematisch dargestellt, dass im negativen Gehäusehalbteil 1 eine erste Materialschicht 2a, nämlich vorzugsweise eine Indiumschicht, angeordnet ist und darüber eine zweite Materialschicht 2b, nämlich die Lithiumschicht.

Diese beiden Materialschichten 2a und 2b werden, wie Figur 3 schematisch zeigt, als Endlosbandmaterial von den Rollen 7 und 8 mittels des Schnittstempels 9 direkt in das negative Gehäusehalbteil 1 eingestanzt. Dabei ist der Boden des Gehäusehalbteiles 1 vorzugsweise mit einem hier nicht dargestellten eingeschweißten Ableiternetz versehen. Bevorzugt ist es, die Indiumschicht von der Rolle 7 als unteren Teil des Elektrodenverbunds vorzusehen. Anschließend an diesen Vorgang wird der Separator 5 aufgelegt. Es wird Elektrolyt eindosiert und anschließend wird der Zellendeckel 1 mit dem Zellenbecher 3, der eine positive Elektrode 4 enthält, die ebenfalls mit Elektrolyt getränkt ist, zusammengefügt.

Die Bildung der Lithium/Indium-Legierung erfolgt dann in der Zelle nach dem Zusammenbau oder bildet sich nach den ersten Entlade-/Ladevorgängen. Dabei diffundieren das Lithium und das indium ineinander, und es bildet sich die gewünschte Lithium/indium-Legierung.

Es ist auch möglich, zuerst das Lithium in das negative Gehäusehalbteil einzubringen und dann erst das Indium hinzuzufügen. Die Stöchiometrie der erfindungsgemäß verwendeten Lithium/Indium-Legierung kann von Li₁ln₁ bis Li₆ln₁ reichen. Bei der Herstellung der Elektrode werden beispielsweise 500 µm dicke Lithiumfolien und 200 µm dicke Indiumfolien unter Argon-Atmosphäre zusammengeführt und in einen Deckel mit Ableiternetz mit 5 bar Druck eingestanzt.

## Patentansprüche

1. Verfahren zur Herstellung eines wiederaufladbaren galvanischen Elements in Form einer Knopfzelle mit:
- einem negativen Gehäusehalbteil (1), das eine negative Elektrode (2) aus einer Lithium/Indium-Legierung enthält,
- einem positiven Gehäusehalbteil (3), das eine positive Elektrode (4) aus Lithium-interkalierendem Material enthält,
- einer Dichtung (6) zwischen den Gehäusehalbteilen (1, 3),
- einem Separator (5) und
- einem organischen Elektrolyten,
bei dem:
- in das negative Gehäusehalbteil (1) eine Indiumschicht (2a) und eine Lithiumschicht (2b) eingebracht werden,
- in das positive Gehäusehalbteil (3) das positive Elektrodenmaterial (4) eingebracht wird und
- die beiden Gehäusehalbteile (1, 3) nach Zudosieren des organischen Elektrolyten und Zwischenlage des Separators (5) unter Einfügung der Dichtung (6) zwischen den Gehäusehalbteilen (1, 3), zu einer Knopfzelle verbunden werden, und dabei aus der Indiumschicht (2a) und der Lithiumschicht (2b) eine Lithium/Indium-Legierungsschicht (2) gebildet wird, wobei
- die Indiumschicht (2a) und die Lithiumschicht (2b) aus von Rollen (7, 8) laufenden Bandmaterialen direkt in das negative Gehäusehalbteil (1) eingestanzt werden.

2. Verfahren nach Anspruch 1, **dadurch gekennzeichnet, dass** vor dem Einbringen der Indiumschicht (2a) und der Lithium-Schicht (2b) ein Ableiter, insbesondere ein Ableiternetz, in das negative Gehäusehalbteil (1) eingeschweißt wird.

3. Verfahren nach Anspruch 1 oder Anspruch 2, **dadurch gekennzeichnet, dass** zuerst eine Indiumschicht (2a) und anschließend eine Lithiumschicht (2b) in das negative Gehäusehalbteil (1) eingebracht wird.

## Claims

1. Method for producing a rechargeable electrochemical element in the form of a button cell with:
- a negative housing half-section (1), containing a negative electrode (2) composed of a lithium/indium alloy,
- a positive housing half-section (3), containing a positive electrode (4) composed of lithium/intercalating material,
- a seal (6) between the housing half-sections (1, 3),
- a separator (5) and
- an organic electrolyte,
wherein:
- an indium layer (2a) and a lithium layer (2b) are introduced into the negative housing half-section (1),
- the positive electrode material (4) is introduced into the positive housing half-section (3), and
- the two housing half-sections (1, 3) are connected to form a button cell once the organic electrolyte and the intermediate layer of the separator (5) have been fed in and with the seal (6) being inserted between the housing half-sections (1, 3), and in the process a lithium/indium alloy layer (2) is formed from the indium layer (2a) and the lithium layer (2b),
- the indium layer (2a) and the lithium layer (2b) being stamped in directly in the negative housing half-section (1) from strip materials running from rolls (7, 8).

2. Method according to Claim 1, **characterized in that** an output conductor, in particular an output conductor network, is welded into the negative housing half-section (1) before the indium layer (2a) and the lithium layer (2b) are introduced into the negative housing half-section (1).

3. Method according to Claim 1 or Claim 2, **characterized in that** an indium layer (2a) is introduced into the negative housing half-section (1) first of all, followed by an lithium layer (2b).

## Revendications

1. Procédé en vue de la fabrication d'un élément galvanique rechargeable sous la forme d'une pile bouton avec:
• une partie de boîtier négative (1), qui contient une électrode négative (2) faite en un alliage lithium/indium,
• une partie de boîtier positive (3), qui contient une électrode positive (4) faite en un matériau intercalaire au lithium,
• un joint d'étanchéité (6) entre les deux parties de boîtier (1 3),
• un diaphragme (5) et
• un électrolyte organique,
dans le cas de laquelle :
• on introduit, dans la partie de boîtier négative (1), une couche d'indium (2a) et une couche de lithium (2b),
• on introduit, dans la partie de boîtier positive (3), le matériau d'électrode positif (4) et
• on connecte, pour former une pile bouton, les deux parties de boîtier (1, 3), après addition par dosage de l'électrolyte organique et placement du diaphragme (5) avec insertion du joint d'étanchéité (6) entre les parties de boîtier (1, 3) et il se forme, en l'occurrence, à partir de la couche d'indium (2a) et de la couche de lithium (2b), une couche d'alliage lithium/indium (2),
• la couche d'indium (2a) et la couche de lithium (2b) étant estampées directement hors de rouleaux (7, 8) de matériaux roulants sous forme de bande dans la partie de boîtier négative (1).

2. Procédé selon la revendication 1, **caractérisé en ce que**, avant l'introduction de la couche d'indium (2a) et de la couche de lithium (2b), l'on soude un conducteur, en particulier un réseau de conducteurs dans la partie de boîtier négative (1).

3. Procédé selon la revendication 1 ou la revendication 2, **caractérisé en ce que** l'on introduit tout d'abord une couche d'indium (2a) et ensuite une couche de lithium (2b) dans la partie de boîtier négative (1).
